# EUROPEAN PATENT SPECIFICATION

(11) **EP 3 336 338 B1**
(45) Date of publication and mention of the grant of the patent: **25.11.2020**
(21) Application number: 16204198.2
(22) Date of filing: 15.12.2016
(51) Int. Cl.: F02D 41/22, F02D 41/00, F02D 19/02, F02D 19/06, F02D 17/02, F02D 13/06, F02D 41/26

(54) **MISFIRE DETECTION FOR AN INTERNAL COMBUSTION ENGINE OPERATING WITH DEACTIVATED CYLINDERS**
FEHLZÜNDUNGSERKENNUNG FÜR MIT DEAKTIVIERTEN ZYLINDERN LAUFENDE BRENNKRAFTMASCHINE
DÉTECTION DE RATÉS D'ALLUMAGE POUR UN MOTEUR À COMBUSTION INTERNE FONCTIONNANT AVEC DES CYLINDRES DÉSACTIVÉS

(43) Date of publication of application: 20.06.2018
(73) Proprietor: Caterpillar Motoren GmbH & Co. KG, 24159 Kiel (DE)
(72) Inventor: Sixel, Eike Joachim, 24109 Kiel (DE); Wester, Daniel, 24242 Felde (DE)
(74) Representative: BRP Renaud & Partner mbB Rechtsanwälte Patentanwälte Steuerberater

(56) References cited:
- EP-A1- 2 108 801
- DE-A1- 10 003 056
- US-A- 5 408 974
- US-A1- 2004 255 905
- US-A1- 2014 366 835
- US-A1- 2015 000 635
- CHEN ET AL.: "Misfire Detection in a Dynamic Skip Fire Engine (SAE 2015-01-0210)", SAE INTERNATIONAL, 14 April 2015 (2015-04-14), XP002770285, DOI: 10.4271/2015-01-2010

## Description

### Technical Field

The present disclosure generally relates to a method of operating an internal combustion engine. More particularly, the present disclosure relates to a method of detecting misfires in one or more cylinders of an internal combustion engine.

### Background

Large internal combustion engines, for example, gaseous fuel internal combustion engines, may be configured to be operated by deactivating cylinders so that the engine runs on a reduced number of cylinders only.

For example, US 8,025,043 B2 discloses a controller for an internal combustion engine. The controller performs a cylinder deactivation operation for improving the fuel economy.

Further, due to safety regulations, some internal combustion engines are provided with an independent monitoring system that is configured to monitor an operation of the internal combustion engine.

US 2004/0255905 A1 discloses an engine control system for monitoring a torque increase during cylinder deactivation for a displacement on demand engine. A controller adjusts a preload of a throttle prior to a cylinder deactivation event. The controller determines whether a fault is present during the cylinder deactivation event, which fault includes one of an engine speed fault, a transmission gear fault and a fueled cylinder fault.
The present disclosure is directed, at least in part, to improving or overcoming one or more aspects of prior systems.

### Summary of the Disclosure

In one aspect, the present disclosure relates to a method of operating an internal combustion engine comprising a plurality of cylinders and being configured to be operated by selectively activating and deactivating the cylinders, the method comprising a step of controlling the internal combustion engine to deactivate a selected number of cylinders, and a step of acquiring at least one operating parameter of the internal combustion engine. The method further comprises determining a target number of deactivated cylinders based on a fixed relationship between the at least one operating parameter and the target number of deactivated cylinders, independent of the control to deactivate the selected number of cylinders. The method also comprises determining a current number of deactivated cylinders, comparing the current number of deactivated cylinders to the target number of deactivated cylinders, and performing a safety measure when the current number of deactivated cylinders is higher than the target number of deactivated cylinders.

In another aspect, the present disclosure relates to a system for controlling an internal combustion engine. The control system comprises a control unit configured to selectively activate and deactivate a plurality of cylinders to operate the internal combustion engine. The control system further comprises a monitoring unit provided independent of the control unit. The monitoring unit is configured to perform the steps of the method of the above-described aspect.

In yet another aspect, not claimed, the present disclosure relates to a computer program comprising computer-executable instructions which, when run on a computer, cause the system of the above-described aspect to perform the steps of the method of the above-described aspect.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic view of an exemplary gaseous fuel internal combustion engine according to the present disclosure;
Fig. 2 is a schematic view of a control system of the internal combustion engine of Fig. 1 according to the present disclosure; and
Fig. 3 is an exemplary diagram illustrating a number of deactivated cylinders for varying engine speeds.

### Detailed Description

The following is a detailed description of exemplary embodiments of the present disclosure. The exemplary embodiments described herein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that it may be problematic to detect misfires in an internal combustion engine operated with deactivated ("skipped") cylinders. The reason for this is that, for safety reasons, a monitoring system has to be provided independent of a control unit of the internal combustion engine. Accordingly, when the control unit operates the internal combustion engine by deactivating one or more cylinders, the monitoring system, which is provided separately and independently of the control unit, does not know which and how many cylinders have been deactivated. As the monitoring system is required to check whether one or more cylinders of the internal combustion engine are cylinders without combustion in order to detect misfires, the monitoring system may incorrectly determine that a misfire has occurred and perform an appropriate safety measure. For example, the monitoring system may shut down the internal combustion engine or, in case of a dual fuel engine operating in gas mode, switch to liquid fuel operation despite the internal combustion engine operating as intended.

The present disclosure is based at least in part on the realization that it is possible to overcome the above-described problem when there is a fixed relationship between the number of deactivated cylinders and one or more operating parameters of the internal combustion engine, for example, an engine load and/or an engine speed. If such a relationship exists, the monitoring system can have access to this information and therefore, upon acquiring the corresponding one or more operating parameters of the internal combustion engine, determine a target number of deactivated cylinders that should currently be deactivated. This target number can then be compared to the number of cylinders without combustion determined by the monitoring system. If the determined number of cylinders without combustion is higher than the target number, the monitoring system can confirm that misfiring has occurred and may perform the appropriate safety measure.

The present disclosure may also be based in part on the realization that, during transients, for example, when the engine load and the engine speed change, the number of deactivated cylinders may also change. During this time, it may be advantageous to introduce a delay in the monitoring system when determining the current number of cylinders without combustion. For example, the monitoring system may be configured to wait for a predetermined period of time prior to the determination when a change in the at least one operating parameter of the internal combustion engine is detected. In addition or as an alternative, the monitoring system may be configured to only perform the safety measure when the current number of cylinders without combustion is higher than the target number of deactivated cylinders for a predetermined period of time after the change in the operating parameter.

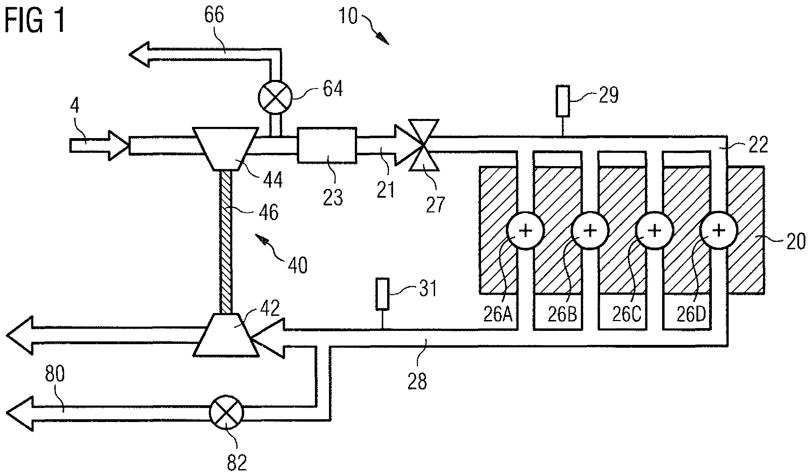

Referring now to the drawings, an exemplary embodiment of an internal combustion engine 10 is illustrated in Fig. 1. The internal combustion engine 10 may include features not shown, such as fuel systems, air systems, cooling systems, peripheries, drive train components, etc. For the purposes of the present disclosure, the internal combustion engine 10 is a gaseous fuel internal combustion engine. Said gaseous fuel internal combustion engine may be any type of internal combustion engine, for example, a dual fuel engine or any other engine that utilizes, at least temporarily, a mixture of gaseous fuel and air for combustion.

The internal combustion engine 10 may be of any size, with any number of cylinders and in any configuration ("V", "in-line", etc.). The internal combustion engine 10 may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications.

Still referring to Fig. 1, the internal combustion engine 10 comprises an engine block 20 including a bank of cylinders 26A-26D, at least one fuel tank (not shown), a turbocharger 40 associated with the cylinders 26A-26D, and an intake manifold 22.

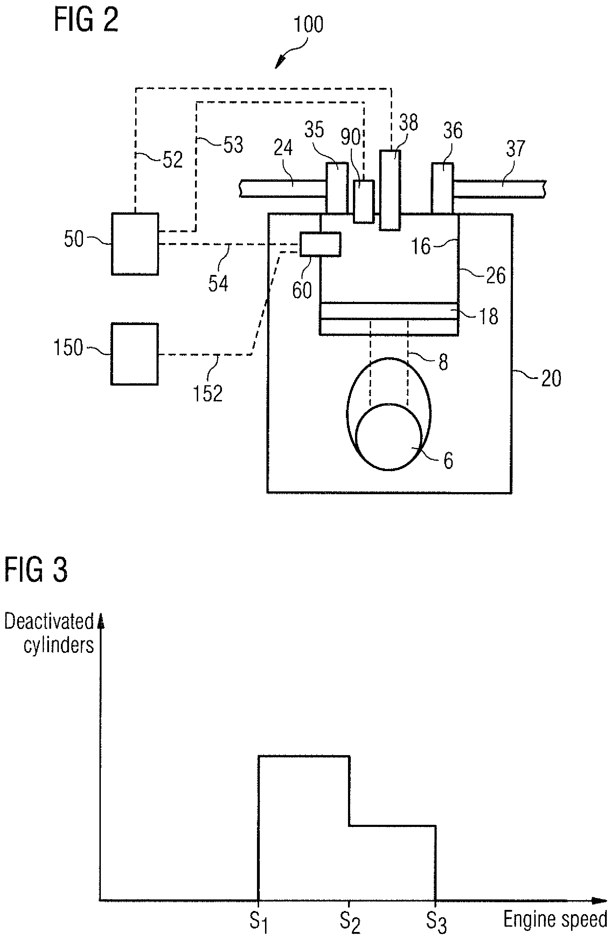

The engine block 20 includes a crank-case (not shown) within which a crank-shaft 6 (see Fig. 2) is rotatably supported. The crank-shaft 6 is connected to pistons 18 (see Fig. 2) that are movable within each of the cylinders 26A-26D during operation of the internal combustion engine 10.

The intake manifold 22 is at least temporarily fluidly connected to each of the cylinders 26A-26D. Each of the cylinders 26A-26D is provided with at least one inlet valve 35 (see Fig. 2) that is adapted to open or close a fluid connection between an intake port 24 and a corresponding combustion chamber 16 of the cylinders 26A-26D.

An exhaust manifold 28 is connected to each of the cylinders 26A-26D. Each of the cylinders 26A-26D is provided with at least one exhaust valve 36 disposed in an exhaust passage 37 (see Fig. 2) and being configured to open and close a fluid connection between the combustion chamber 16 of each cylinder 26A-26D and the exhaust manifold 28.

Generally, when the internal combustion engine 10 is operated, a mixture of gaseous fuel and air (in the following referred to as the "mixture") is introduced into the combustion chambers of the plurality of cylinders 26A-26D via an air inlet 4, the intake manifold 22 and the inlet valves 35, which supply compressed intake air, and gaseous fuel admission valves 38 (see Fig. 2), which supply gaseous fuel. After combustion, exhaust gases generated by the combustion process are released from the cylinders 26A-26D through the exhaust manifold 28.

In some embodiments, the gaseous fuel may be mixed with the intake air upstream of the cylinders 26. For example, a gas mixer may be provided upstream of the intake manifold, or cylinder-specific gaseous fuel admission valves similar to gaseous fuel admission valves 38 may be provided in each intake port 24 to supply gaseous fuel.

An intake manifold pressure sensor 29 may be disposed in intake manifold 22 to detect an intake manifold pressure (IMAP) of the intake air or the mixture of intake air and gaseous fuel. The intake manifold pressure sensor 29 is configured to generate a signal indicative of a pressure. Alternatively, the sensor 29 may be configured as an air intake mass flow sensor generating signals indicative of a measured intake air mass flow.

An exhaust manifold pressure sensor 31 may be disposed in the exhaust manifold 28 to detect an exhaust manifold pressure of the exhaust in the exhaust manifold 28. The exhaust manifold pressure sensor 31 is configured to generate a signal indicative of a pressure. Alternatively, the sensor 31 may be configured as an exhaust mass flow sensor generating signals indicative of a measured exhaust mass flow.

The turbocharger 40 is configured to use the heat and pressure of the exhaust gas of the internal combustion engine 10 to drive a compressor 44 for compressing the intake air prior to being supplied to the cylinders 26A-26D. Specifically, exhaust gas passing a turbine 42 of the turbocharger 40 rotates the turbine 42, thereby decreasing in pressure and temperature. The compressor 44 is rotatably connected to the turbine 42 via a common shaft 46 and driven by the turbine 42.

An outlet of the compressor 44 is fluidly connected to an inlet of the intake manifold 22 via a compressor connection 21. As shown in Fig. 1, an outlet of the compressor 44 may be connected to the inlet of the intake manifold 22 via a cooler 23. A throttle valve 27 arranged downstream of the cooler 23 is configured to open or close the fluid connection between the compressor connection 21 and the intake manifold 22, thereby enabling or restricting a flow of the compressed intake air from the compressor connection 21 into the intake manifold 22.

During operation of the internal combustion engine 10, the intake air is compressed and cooled before being supplied to the cylinders 26A-26D. Within the cylinders 26A-26D, further compression and heating of the mixture may be caused by movement of the pistons 18 (see Fig. 2). Then, the mixture within the cylinders 26A-26D may be ignited, for example, by using a spark plug or a pilot injection of liquid fuel to initiate the combustion of the mixture at a predetermined ignition timing. The produced exhaust gas is discharged via the exhaust manifold 28. An outlet of exhaust manifold 28 is fluidly connected to an inlet of the turbine 42. An outlet of the turbine 42 may be fluidly connected to, for example, an exhaust gas treatment system (not shown).

Additionally, as indicated in Fig. 1, the internal combustion engine 10 may be provided with a waste gate system for bypassing the turbine 42. The waste gate system includes a waste gate connection 80 and a waste gate valve 82. Additionally, the internal combustion engine 10 may include a blow-off system for discharging intake air downstream of the compressor 44 to reduce an intake air pressure. The blow-off system includes a blow-off connection 66 and a blow-off valve 64. It should be appreciated that the blow-off connection 66 and the blow-off valve 64 may be provided with different configurations than the one shown in Fig. 1, if appropriate. Alternatively, one or more of these components may be omitted.

Turning now to Fig. 2, an exemplary embodiment of a system 100 for operating the internal combustion engine 10 is illustrated. The person skilled in the art will recognize that the exemplary cylinder 26 shown in Fig. 2 demonstrates the principles of the cylinders 26A-26D of Fig. 1. Therefore, the exemplary disclosed configuration shown in Fig. 2 also applies to the cylinders 26A-26D shown in Fig. 1.

Fig. 2 shows a schematic cross-sectional view of the cylinder 26. The cylinder 26 defines the combustion chamber 16 and includes the piston 18. The crank-shaft 6 is connected to the piston 18 via the piston rod 8. The piston 18 is configured to reciprocate within the cylinder 26.

The cylinder 26 is connected to the intake manifold 22 (Fig. 1) via the intake port 24 and to the exhaust manifold 28 via the exhaust passage 37. The inlet valve 35 is disposed in the intake port 24, and the exhaust valve 36 is disposed in the exhaust passage 37. The gaseous fuel admission valve 38 is provided to supply gaseous fuel to the combustion chamber 16 of the cylinder 26. In the exemplary embodiment, the gaseous fuel admission valve 38 may be a solenoid-operated gas admission valve (SOGAV).

The inlet valve 35 is configured to supply compressed intake air to the combustion chamber 16. The exhaust valve 36 is configured to discharge exhaust from the combustion chamber 16 to the exhaust manifold 28 after combustion.

An ignition device 90 is configured to ignite the mixture of gaseous fuel and air inside the combustion chamber 16 at a desired ignition timing. In some embodiments, the ignition device 90 may be a spark plug. In other exemplary embodiments, the ignition device 90 may be a pilot injector configured to inject a pilot amount of, for example, diesel fuel to ignite the mixture. Further, in some exemplary embodiments, a pre-combustion chamber (not shown) may be provided upstream of the combustion chamber 16, and the ignition device 90 may be configured to ignite a small amount of gaseous fuel supplied to the pre-combustion chamber in order to initiate combustion of gaseous fuel and air in the (main) combustion chamber 16.

The system 100 includes a sensor 60 associated with the cylinder 26. In some embodiments, the sensor 60 may be disposed at least in part within the combustion chamber 16. In other exemplary embodiments, the sensor 60 may be disposed outside of the combustion chamber 16. The sensor 60 is configured to detect an operating parameter associated with the combustion in combustion chamber 16 indicative of or associated with, for example, an engine load of the internal combustion engine 10. In some embodiments, the sensor 60 may be a pressure sensor configured to detect a cylinder pressure in the combustion chamber 16. The sensor 60 may be any known pressure sensor and may be configured to detect the pressure within combustion chamber 16 in a known manner. In other embodiments, sensor 60 may be configured to detect other characteristics from which a current load amount of the cylinder 26 and/or the internal combustion engine 10 can be determined.

The system 100 further includes a control unit 50. The control unit 50 is connected to the gaseous fuel admission valve 38 via a communication line 52. The control unit 50 is configured to control opening and closing of the gaseous fuel admission valve 38. The control unit 50 is further connected to the ignition device 90 via a communication line 53 to control an ignition timing of the mixture in the combustion chamber 16 via the ignition device 90. The control unit 50 is further connected to the sensor 60 to receive a signal indicative of or associated with an engine load of the internal combustion engine 10, for example, a pressure of the cylinder 26.

Additionally, the control unit 50 is configured to activate and deactivate one or more cylinders 26 during operation of the internal combustion engine 10. For example, deactivation of one cylinder 26 may include operating the respective gaseous fuel admission valve 38 to stop supplying gaseous fuel to the respective combustion chamber 16, and/or deactivating the respective ignition device 90 to prevent an ignition. Similarly, activation of one cylinder 26 may include allowing the respective gaseous fuel admission valve 38 to supply gaseous fuel, and/or allowing the respective ignition device 90 to ignite the mixture.

Further, the control unit 50 is connected to the waste gate valve 82 and/or the blow-off valve 64 (see Fig. 1) for controlling operation thereof. Additionally, the control unit 50 is configured to receive signals from the intake manifold pressure sensor 29 and from the exhaust manifold pressure sensor 31 (see Fig. 1). The control unit 50 is further configured to determine a (gaseous) fuel mass flow through an opened gaseous fuel admission valve 38, for example by analyzing an opening duration of the gaseous fuel admission 38.

The control unit 50 may be a single microprocessor or dual microprocessors that include means for controlling, among others, an operation of various components of the internal combustion engine 10. The control unit 50 may be a general engine control unit (ECU) capable of controlling the internal combustion engine 10 and/or its associated components. The control unit 50 may include all components required to run an application such as, for example, a memory, a secondary storage device, and a processor such as a central processing unit or any other means known in the art for controlling the internal combustion engine 10 and its components. Various other known circuits may be associated with the control unit 50, including power supply circuitry, signal conditioning circuitry, communication circuitry and other appropriate circuitry. The control unit 50 may analyze and compare received and stored data and, based on instructions and data stored in memory or input by a user, determine whether action is required. For example, the control unit 50 may compare received values with the target values stored in memory, and, based on the results of the comparison, transmit signals to one or more components to alter the operation status of the same.

The control unit 50 may include any memory device known in the art for storing data relating to an operation of the internal combustion engine 10 and its components. The data may be stored in the form of one or more maps. Each of the maps may be in the form of tables, graphs and/or equations, and may include a compilation of data collected from lab and/or field operation of the internal combustion engine 10. The maps may be generated by performing instrumented tests on the operation of the internal combustion engine 10 under various operating conditions while varying parameters associated therewith or performing various measurements. The control unit 50 may reference these maps and control operation of one component in response to the desired operation of another component. For example, the maps may contain data on the required opening duration of the gaseous fuel admission valve 38 for dosing a particular amount of gaseous fuel into the combustion chamber 16, or on the number of cylinders that are to be skipped based on an operating state of the internal combustion engine 10.

The system 100 further includes a monitoring unit 150. The monitoring unit 150 is configured to monitor an operation of internal combustion engine 10, and is provided independent of the control unit 50. Therefore, in case of a failure of the control unit 50, the monitoring unit 150 can still detect resulting irregularities in the operation of internal combustion engine 10 and perform appropriate counter-measures.

In the exemplary embodiment, the monitoring unit 150 is connected to the sensor 60 associated with the cylinder 26 by a communication line 152, and is configured to receive cylinder pressure measurements from the sensor 60. It will be appreciated that the monitoring unit 150 is configured to receive cylinder pressure measurements for each of the plurality of cylinders 26A-26D. In some embodiments, the monitoring unit 150 may also be connected to a temperature sensor detecting, for example, an in-cylinder temperature or an exhaust gas temperature, or to a speed sensor (not shown) associated with the crank-shaft 6.

The monitoring unit 150 may be configured similar to the control unit 50. In particular, the monitoring unit 150 may be configured to analyze and compare received and stored data and, based on instructions and data stored in memory or input by a user, determine whether action is required. Further, the monitoring unit 150 may include any memory device known in the art for storing data relating to an operation of the internal combustion engine 10 and its components. The data may be stored in the form of one or more maps and the like. For example, the memory of the monitoring unit 150 may include a map that relates a desired or target number of deactivated cylinders to an engine speed and/or an engine load of internal combustion engine 10.

During operation of internal combustion engine 10, the control unit 50 is configured to determine the number of cylinders that are to be deactivated based on, for example, an operating state of internal combustion engine 10. For example, in a first phase of starting internal combustion engine 10, a large amount of power may be required to overcome the inertia of the engine and its components in order to start rotating. Therefore, all cylinders 26A-26D, or a selected number of cylinders 26A-26D, may be fired during this first phase. This is shown in Fig. 3. After reaching a first speed threshold si, less power may be required to accelerate internal combustion engine 10 to a desired speed, for example, a rated speed of internal combustion engine 10. Therefore, a smaller number of selected cylinders 26A-26D may be fired. Accordingly, the number of deactivated cylinders is increased.

As also shown in Fig. 3, for example, during this second phase, the number of deactivated cylinders 26A-26D may change depending on operating parameters of internal combustion engine 10, for example, an engine load. Therefore, as shown in Fig. 3, as an example, the number of deactivated cylinders 26A-26D may change at a second speed threshold s₂.

After reaching the rated speed of the engine at a third speed threshold s₃ and exceeding a load threshold, an AFR control for normal operation of internal combustion engine 10 may be activated, and all cylinders 26A-26D may be fired.

It will be readily appreciated that the number of cylinders that are to be deactivated for a given operating state of internal combustion engine 10, for example, a given engine load and/or a given engine speed, may be included in a map that is stored in the memories of both control unit 50 and monitoring unit 150. Therefore, depending on detected operating parameters of internal combustion engine 10, control unit 50 can control the engine accordingly by deactivating the desired number of cylinders 26A-26D. It will be appreciated by the skilled person that there are many control methods that can be used to appropriately control the number of deactivated cylinders based on, for example, engine load.

In a similar manner, monitoring unit 150 can also refer to the same or a corresponding map stored in the memory of the same in order to determine a target number of deactivated cylinders 26A-26D. To this end, monitoring unit 150 acquires at least one operating parameter of internal combustion engine 10. For example, the operating parameter may be an engine load, and may be determined based on cylinder pressure measurements by sensor 60 for one or more of the cylinders 26A-26D. In addition or as an alternative, monitoring unit 150 may also determine an engine speed based on measurements by a corresponding speed sensor. It will be appreciated that there are many possibilities for detecting operating parameters of internal combustion engine 10 that are related to the target number of deactivated cylinders. What is important, however, is that the monitoring unit 150 determines the target number of deactivated cylinders independent of the control performed by the control unit 50 to deactivate said target number of deactivated cylinders 26A-26D.

After determining the target number of deactivated cylinders 26A-26D based on the at least one operating parameter of internal combustion engine 10, monitoring unit 150 is configured to determine a current number of deactivated cylinders. As used herein, the term "deactivated cylinder" generally refers to a cylinder without combustion, either due to being deactivated by control unit 50 or due to misfiring. In order to determine the current number of deactivated cylinders without combustion, monitoring unit 150 may evaluate the measurement results received from the sensors 60 associated with all cylinders 26A-26D. Based on the received measurement results, monitoring unit 150 may determine at least one combustion parameter and/or a combustion profile for each cylinder. Based on the determined combustion parameter or profile, monitoring unit 150 may determine for each of the cylinders 26A-26D whether a combustion has occurred. For example, monitoring unit 150 may be configured to determine that no combustion (misfire) has occurred when the detected cylinder pressure does not exceed a predetermined reference pressure, for example, during a combustion cycle. Accordingly, monitoring unit 150 can determine a current number of deactivated cylinders based on the cylinder pressure measurements by the associated sensors 60. It will be appreciated, however, that in other embodiments different measurements may be used to determine the number of deactivated cylinders, for example, in-cylinder temperature measurements or exhaust gas temperature measurements.

After determining the current number of deactivated cylinders, monitoring unit 150 is configure to compare the current number of deactivated cylinders 26A-26D to the target number of deactivated cylinders 26A-26D. In the exemplary embodiment, monitoring unit 150 is further configured to perform a safety measure when the current number of deactivated cylinders is higher than the target number of deactivated cylinders. For example, monitoring unit 150 may be configured to shut down internal combustion engine 10 when the current number of deactivated cylinders is higher than the target number of deactivated cylinders. In other embodiments relating to a dual fuel engine, monitoring unit 150 may be configured to switch from gas to liquid fuel mode when the current number of deactivated cylinders is higher than the target number of deactivated cylinders in the gas mode.

As described above with reference to Fig. 3, based on operating conditions of internal combustion engine 10, the number of cylinders that are deactivated in accordance with the control by the control unit 50 may change, for example, based on varying engine loads. In this case, it will be readily appreciated that appropriate measures need to be taken in order to avoid a false determination by the monitoring unit 150 that, for example, the number of deactivated cylinders is too high. For example, when the number of cylinders 26A-26D that are deactivated by the control unit 50 increases, for example, at the first threshold si, the monitoring unit 150 may not be capable of immediately detecting the change in the operating condition of internal combustion engine 10 and continue to operate with the previous target number of deactivated cylinders. Accordingly, the monitoring unit 150 may falsely determine that misfiring has occurred immediately after the change in the control by the control unit 50. Likewise, the monitoring unit 150 may determine that the operating condition of internal combustion engine 10 has changed, while the control unit 50 still operates with the previous number of deactivated cylinders.

Accordingly, the monitoring unit 150 may be configured to temporarily increase the target number of deactivated cylinders when the change in the at least one operating parameter is detected in order to avoid false determinations. In addition or as an alternative, the monitoring unit 150 may also wait for lapse for a predetermined period of time before determining the current number of deactivated cylinders and/or performing the safety measure when a change in the at least one operating parameter of internal combustion engine 10 is detected. In this manner, false detections of misfiring by the monitoring unit 150 can be avoided.

In order to further increase the reliability of the detection by the monitoring unit 150, the monitoring unit 150 may also be configured to determine the current number of deactivated cylinders over a plurality of combustion cycles. In this case, the monitoring unit 150 may further be configured to perform a safety measure only when the current number of deactivated cylinders 26A-26D is higher than the target number for a predetermined number of the plurality of combustion cycles, and/or when an average number of deactivated cylinders 26A-26D is higher than the target number.

In other embodiments, the monitoring unit 150 may also be configured to set the target number of deactivated cylinders 26A-26D to a predetermined value when the operating parameter exceeds an operating parameter threshold. For example, the monitoring unit 150 may be configured to set the target number of deactivated cylinders to zero when an engine load threshold and/or a speed threshold is reached (for example, when reaching the speed threshold s₃ in Fig. 3). In this manner, a reliably detection of misfiring under specific operating conditions of internal combustion engine 10, for example, when the engine is operated without deactivated cylinders, can be reliably detected.

In the above determination of the at least one operating parameter based on measured in-cylinder pressure values of the plurality of activated cylinders 26A-26D, the monitoring unit 150 may be configured to determine the at least one operating parameter based on an average in-cylinder pressure value of a plurality of activated cylinders 26A-26D and/or a plurality of in-cylinder pressure values of an individual activated cylinder.

As outlined above, a system 100 for controlling internal combustion engine 10 comprises the control unit 50 configured to selectively activate and deactivate the cylinders 26A-26D to operate internal combustion engine 10, and the monitoring unit 150 provided independent of the control unit 50. The monitoring unit 150 is configured to acquire the at least one operating parameter of internal combustion engine 10, determine the target number of deactivated cylinders 26A-26D based on the at least one operating parameter, determine the current number of deactivated cylinders 26A-26D, and compare the current number of deactivated cylinders 26A-26D to the target number of deactivated cylinders 26A-26D. When the current number of deactivated cylinders 26A-26D is higher than the target number of deactivated cylinders 26A-26D, the monitoring unit 150 performs an appropriate safety measure.

### Industrial Applicability

The industrial applicability of the systems and methods for operating an internal combustion engine described herein will be readily appreciated from the foregoing discussion. An exemplary machine suited to the disclosure is a large internal combustion engine such as the gaseous fuel internal combustion engines of the series M46DF, GCM46, GCM34, M32DF, M34DF, M27DF, M3x manufactured by Caterpillar Motoren GmbH & Co. KG, Kiel, Germany. Similarly, the systems and methods described herein can be adapted to a large variety of other internal combustion engines used for various different tasks.

Although the preferred embodiments of this invention have been described herein, improvements and modifications may be incorporated without departing from the scope of the following claims.

## Claims

1. A method of operating an internal combustion engine (10) comprising a plurality of cylinders (26A-26D), the internal combustion engine (10) being configured to be operated by selectively activating and deactivating the cylinders (26A-26D), the method comprising:
controlling the internal combustion to deactivate a selected number of cylinders (26A-26D);
acquiring at least one operating parameter of the internal combustion engine (10);
determining a target number of deactivated cylinders (26A-26D) based on a fixed relationship between the at least one operating parameter and the target number of deactivated cylinders, independent of the control to deactivate the selected number of cylinders (26A-26D);
determining a current number of deactivated cylinders (26A-26D);
comparing the current number of deactivated cylinders (26A-26D) to the target number of deactivated cylinders (26A-26D); and
performing a safety measure when the current number of deactivated cylinders (26A-26D) is higher than the target number of deactivated cylinders (26A-26D).

2. The method of claim 1, wherein the at least one operating parameter includes an engine load of the internal combustion engine (10).

3. The method of claim 1 or 2, wherein the at least one operating parameter includes an engine speed of the internal combustion engine (10).

4. The method of any one of claims 1 to 3, further comprising:
providing a map defining a relationship between the at least one operating parameter and the target number of deactivated cylinders; and
determining the target number of deactivated cylinders (26A-26D) based on the map.

5. The method of any one of claims 1 to 4, further comprising
setting the target number of deactivated cylinders (26A-26D) to a predetermined value when the at least one operating parameter exceeds an operating parameter threshold.

6. The method of claim 5, further comprising
setting the target number of deactivated cylinders (26A-26D) to zero when the at least one operating parameter exceeds the operating parameter threshold.

7. The method of any one of claims 1 to 6, further comprising:
determining the current number of deactivated cylinders (26A-26D) over a plurality of combustion cycles; and
performing the safety measure only when the current number of deactivated cylinders (26A-26D) is higher than the target number in a predetermined number of the plurality of combustion cycles, and/or when an average number of deactivated cylinders (26A-26D) is higher than the target number.

8. The method of any one of claims 1 to 7, further comprising:
detecting a change in the at least one operating parameter of the internal combustion engine (10); and
temporarily increasing the target number of deactivated cylinders (26A-26D) after the detection of the change, and/or waiting for lapse of a predetermined period of time before determining the current number of deactivated cylinders (26A-26D) and/or performing the safety measure after the detection of the change.

9. The method of any one of claims 1 to 8,
wherein the current number of deactivated cylinders (26A-26D) is determined based at least in part on measured in-cylinder pressure values of the plurality of activated cylinders (26A-26D)

10. The method of any one of claims 1 to 9,
wherein the at least one operating parameter is determined based at least in part on measured in-cylinder pressure values of the plurality of activated cylinders (26A-26D).

11. The method of claim 10, wherein the at least one operating parameter is determined based on an average in-cylinder pressure value of the plurality of activated cylinders (26A-26D) and/or a plurality of in-cylinder pressure values of an individual activated cylinder (26A-26D).

12. The method of any one of claims 1 to 11, wherein the internal combustion engine (10) is a dual fuel engine, and the safety measure includes switching the dual fuel engine from operating in gas mode to operating in liquid fuel mode.

13. A system (100) for controlling an internal combustion engine (10), comprising:
a control unit (50) configured to selectively activate and deactivate a plurality of cylinders (26A-26D) to operate the internal combustion engine (10); and
a monitoring unit (150) provided independent of the control unit (50) and configured to:
acquire at least one operating parameter of the internal combustion engine (10);
determine a target number of deactivated cylinders (26A-26D) based on a fixed relationship between the at least one operating parameter and the target number of deactivated cylinders, independent of the control to deactivate the selected number of cylinders (26A-26D);
determine a current number of deactivated cylinders (26A-26D);
compare the current number of deactivated cylinders (26A-26D) to the target number of deactivated cylinders (26A-26D); and
perform a safety measure when the current number of deactivated cylinders (26A-26D) is higher than the target number of deactivated cylinders (26A-26D).

## Patentansprüche

1. Verfahren zum Betreiben einer Brennkraftmaschine (10), die eine Vielzahl von Zylindern (26A-26D) umfasst, wobei die Brennkraftmaschine (10) konfiguriert ist, durch selektives Aktivieren und Deaktivieren der Zylinder (26A-26D) betrieben zu werden, wobei das Verfahren umfasst:
Steuern der Brennkraftmaschine, um eine ausgewählte Anzahl von Zylindern (26A-26D) zu deaktivieren;
Erfassen mindestens eines Betriebsparameters der Brennkraftmaschine (10);
Bestimmen einer Soll-Anzahl deaktivierter Zylinder (26A-26D) basierend auf einer festen Beziehung zwischen dem mindestens einen Betriebsparameter und der Soll-Anzahl deaktivierter Zylinder, unabhängig von der Steuerung zum Deaktivieren der ausgewählten Anzahl von Zylindern (26A-26D);
Bestimmen einer Ist-Anzahl deaktivierter Zylinder (26A-26D);
Vergleichen der Ist-Anzahl deaktivierter Zylinder (26A-26D) mit der Soll-Anzahl deaktivierter Zylinder (26A-26D); und
Durchführen einer Sicherheitsmaßnahme, wenn die Ist-Anzahl deaktivierter Zylinder (26A-26D) größer als die Soll-Anzahl deaktivierter Zylinder (26A-26D) ist.

2. Verfahren nach Anspruch 1, wobei der mindestens eine Betriebsparameter eine Motorlast der Brennkraftmaschine (10) einschließt.

3. Verfahren nach Anspruch 1 oder 2, wobei der mindestens eine Betriebsparameter eine Motordrehzahl der Brennkraftmaschine (10) einschließt.

4. Verfahren nach einem der Ansprüche 1 bis 3, ferner umfassend:
Bereitstellen eines Kennfelds, das eine Beziehung zwischen dem mindestens einen Betriebsparameter und der Soll-Anzahl deaktivierter Zylinder definiert; und
Bestimmen der Soll-Anzahl deaktivierter Zylinder (26A-26D) basierend auf dem Kennfeld.

5. Verfahren nach einem der Ansprüche 1 bis 4, ferner umfassend
Einstellen der Soll-Anzahl deaktivierter Zylinder (26A-26D) auf einen vorbestimmten Wert, wenn der mindestens eine Betriebsparameter einen Betriebsparameterschwellenwert überschreitet.

6. Verfahren nach Anspruch 5, ferner umfassend
Einstellen der Soll-Anzahl deaktivierter Zylinder (26A-26D) auf Null, wenn der mindestens eine Betriebsparameter den Betriebsparameterschwellenwert überschreitet.

7. Verfahren nach einem der Ansprüche 1 bis 6, ferner umfassend:
Bestimmen der Ist-Anzahl deaktivierter Zylinder (26A-26D) über eine Vielzahl von Verbrennungszyklen; und
Durchführen der Sicherheitsmaßnahme nur dann, wenn die Ist-Anzahl deaktivierter Zylinder (26A-26D) in einer vorbestimmten Anzahl der Vielzahl von Verbrennungszyklen größer als die Soll-Anzahl ist und/oder wenn eine durchschnittliche Anzahl deaktivierter Zylinder (26A-26D) größer als die Soll-Anzahl ist.

8. Verfahren nach einem der Ansprüche 1 bis 7, ferner umfassend:
Erkennen einer Änderung in dem mindestens einen Betriebsparameter der Brennkraftmaschine (10); und
vorübergehendes Erhöhen der Soll-Anzahl deaktivierter Zylinder (26A-26D) nach dem Erkennen der Änderung und/oder Abwarten des Ablaufs eines vorbestimmten Zeitraums vor dem Bestimmen der Ist-Anzahl deaktivierter Zylinder (26A-26D) und/oder Durchführen der Sicherheitsmaßnahme nach dem Erkennen der Änderung.

9. Verfahren nach einem der Ansprüche 1 bis 8,
wobei die Ist-Anzahl deaktivierter Zylinder (26A-26D) mindestens teilweise basierend auf gemessenen Zylinderinnendruckwerten der Vielzahl von aktivierten Zylindern (26A-26D) bestimmt wird.

10. Verfahren nach einem der Ansprüche 1 bis 9,
wobei der mindestens eine Betriebsparameter mindestens teilweise basierend auf gemessenen Zylinderinnendruckwerten der Vielzahl von aktivierten Zylindern (26A-26D) bestimmt wird.

11. Verfahren nach Anspruch 10, wobei der mindestens eine Betriebsparameter basierend auf einem durchschnittlichen Zylinderinnendruckwert der Vielzahl von aktivierten Zylindern (26A-26D) und/oder einer Vielzahl von Zylinderinnendruckwerten eines einzelnen aktivierten Zylinders (26A-26D) bestimmt wird.

12. Verfahren nach einem der Ansprüche 1 bis 11, wobei die Brennkraftmaschine (10) ein Zweikraftstoffmotor ist und die Sicherheitsmaßnahme das Umschalten des Zweikraftstoffmotors vom Betrieb im Gasmodus auf den Betrieb im Flüssigbrennstoffmodus einschließt.

13. System (100) zum Steuern einer Brennkraftmaschine (10), umfassend:
eine Steuereinheit (50), die konfiguriert ist, um eine Vielzahl von Zylindern (26A-26D) selektiv zu aktivieren und zu deaktivieren, um die Brennkraftmaschine (10) zu betreiben; und
eine Überwachungseinheit (150), die unabhängig von der Steuereinheit (50) bereitgestellt und konfiguriert ist zum:
Erfassen mindestens eines Betriebsparameters der Brennkraftmaschine (10);
Bestimmen einer Soll-Anzahl deaktivierter Zylinder (26A-26D) basierend auf einer festen Beziehung zwischen dem mindestens einen Betriebsparameter und der Soll-Anzahl deaktivierter Zylinder, unabhängig von der Steuerung zum Deaktivieren der ausgewählten Anzahl von Zylindern (26A-26D);
Bestimmen einer Ist-Anzahl deaktivierter Zylinder (26A-26D);
Vergleichen der Ist-Anzahl deaktivierter Zylinder (26A-26D) mit der Soll-Anzahl deaktivierter Zylinder (26A-26D); und
Durchführen einer Sicherheitsmaßnahme, wenn die Ist-Anzahl deaktivierter Zylinder (26A-26D) höher ist als die Soll-Anzahl deaktivierter Zylinder (26A-26D).

## Revendications

1. Procédé d'actionnement d'un moteur à combustion interne (10) comprenant une pluralité de cylindres (26A-26D), le moteur à combustion interne (10) étant configuré pour être actionné en activant et en désactivant sélectivement les cylindres (26A-26D), le procédé comprenant :
la commande de la combustion interne pour désactiver un nombre sélectionné de cylindres (26A-26D) ;
l'acquisition d'au moins un paramètre de fonctionnement du moteur à combustion interne (10) ;
la détermination d'un nombre cible de cylindres désactivés (26A-26D) sur la base d'une relation fixe entre le au moins un paramètre de fonctionnement et le nombre cible de cylindres désactivés, indépendamment de la commande pour désactiver le nombre sélectionné de cylindres (26A-26D) ;
la détermination d'un nombre actuel de cylindres désactivés (26A-26D) ;
la comparaison du nombre actuel de cylindres désactivés (26A-26D) au nombre cible de cylindres désactivés (26A-26D) ; et
l'exécution d'une mesure de sécurité lorsque le nombre actuel de cylindres désactivés (26A-26D) est supérieur au nombre cible de cylindres désactivés (26A-26D).

2. Procédé selon la revendication 1, dans lequel le au moins un paramètre de fonctionnement inclut une charge de moteur du moteur à combustion interne (10).

3. Procédé selon la revendication 1 ou 2, dans lequel le au moins un paramètre de fonctionnement inclut une vitesse de moteur du moteur à combustion interne (10).

4. Procédé selon l'une quelconque des revendications 1 à 3, comprenant en outre :
la fourniture d'une carte définissant une relation entre le au moins un paramètre de fonctionnement et le nombre cible de cylindres désactivés ; et
la détermination du nombre cible de cylindres désactivés (26A-26D) sur la base de la carte.

5. Procédé selon l'une quelconque des revendications 1 à 4, comprenant en outre
le réglage du nombre cible de cylindres désactivés (26A-26D) à une valeur prédéterminée lorsque le au moins un paramètre de fonctionnement dépasse un seuil de paramètre de fonctionnement.

6. Procédé selon la revendication 5, comprenant en outre
le réglage du nombre cible de cylindres désactivés (26A-26D) à zéro lorsque le au moins un paramètre de fonctionnement dépasse le seuil de paramètre de fonctionnement.

7. Procédé selon l'une quelconque des revendications 1 à 6, comprenant en outre :
la détermination du nombre actuel de cylindres désactivés (26A-26D) sur une pluralité de cycles de combustion ; et
l'exécution de la mesure de sécurité uniquement lorsque le nombre actuel de cylindres désactivés (26A-26D) est supérieur au nombre cible dans un nombre prédéterminé de la pluralité de cycles de combustion, et/ou lorsqu'un nombre moyen de cylindres désactivés (26A-26D) est supérieur au nombre cible.

8. Procédé selon l'une quelconque des revendications 1 à 7, comprenant en outre :
la détection d'un changement dans le au moins un paramètre de fonctionnement du moteur à combustion interne (10) ; et
l'augmentation temporaire du nombre cible de cylindres désactivés (26A-26D) après la détection du changement, et/ou l'attente pendant un laps de temps prédéterminé avant la détermination du nombre actuel de cylindres désactivés (26A-26D) et/ou la réalisation de la mesure de sécurité après la détection du changement.

9. Procédé selon l'une quelconque des revendications 1 à 8,
dans lequel le nombre actuel de cylindres désactivés (26A-26D) est déterminé en se basant au moins en partie sur des valeurs de pression dans le cylindre mesurées de la pluralité de cylindres activés (26A-26D)

10. Procédé selon l'une quelconque des revendications 1 à 9,
dans lequel le au moins un paramètre de fonctionnement est déterminé en se basant au moins en partie sur des valeurs de pression dans le cylindre mesurées de la pluralité de cylindres activés (26A-26D).

11. Procédé selon la revendication 10, dans lequel le au moins un paramètre de fonctionnement est déterminé en se basant sur une valeur moyenne de pression dans le cylindre de la pluralité de cylindres activés (26A-26D) et/ou sur une pluralité de valeurs de pression dans le cylindre d'un cylindre activé individuel (26A-26D).

12. Procédé selon l'une quelconque des revendications 1 à 11, dans lequel le moteur à combustion interne (10) est un moteur à double carburant, et la mesure de sécurité inclut la commutation du moteur à double carburant du fonctionnement en mode gaz à un fonctionnement en mode combustible liquide.

13. Système (100) pour la commande d'un moteur à combustion interne (10), comprenant :
une unité de commande (50) configurée pour activer et désactiver sélectivement une pluralité de cylindres (26A-26D) pour actionner le moteur à combustion interne (10) ; et
une unité de surveillance (150) prévue indépendamment de l'unité de commande (50) et configurée pour :
acquérir au moins un paramètre de fonctionnement du moteur à combustion interne (10) ;
déterminer un nombre cible de cylindres désactivés (26A-26D) sur la base d'une relation fixe entre le au moins un paramètre de fonctionnement et le nombre cible de cylindres désactivés, indépendamment de la commande pour désactiver le nombre sélectionné de cylindres (26A-26D) ;
déterminer un nombre actuel de cylindres désactivés (26A-26D) ;
comparer le nombre actuel de cylindres désactivés (26A-26D) au nombre cible de cylindres désactivés (26A-26D) ; et
exécuter une mesure de sécurité lorsque le nombre actuel de cylindres désactivés (26A-26D) est supérieur au nombre cible de cylindres désactivés (26A-26D).
